(19) Europäisches Patentamt European Patent Office Office européen des brevets

(11) **EP 3 203 572 B1**

(12) **EUROPEAN PATENT SPECIFICATION**

(45) Date of publication and mention of the grant of the patent:
**19.08.2020 Bulletin 2020/34**

(51) Int Cl.:
***H01M 10/06*** (2006.01)

(21) Application number: **17154096.6**

(22) Date of filing: **01.02.2017**

(54) **POSITIVE ELECTRODE PLATE FOR LEAD-ACID BATTERY, LEAD-ACID BATTERY AND METHOD OF MANUFACTURING POSITIVE ELECTRODE PLATE FOR LEAD-ACID BATTERY**

POSITIVE ELEKTRODENPLATTE FÜR BLEISÄUREBATTERIE, BLEISÄUREBATTERIE UND VERFAHREN ZU HERSTELLUNG VON POSITIVER ELEKTRODENPLATTE FÜR BLEISÄUREBATTERIEN

PLAQUE D'ÉLECTRODE POSITIVE POUR BATTERIE AU PLOMB-ACIDE, BATTERIE AU PLOMB-ACIDE ET PROCÉDÉ DE FABRICATION DE PLAQUE D'ÉLECTRODE POSITIVE POUR BATTERIE AU PLOMB-ACIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.02.2016 JP 2016018090**
**26.12.2016 JP 2016250841**

(43) Date of publication of application:
**09.08.2017 Bulletin 2017/32**

(73) Proprietor: **GS Yuasa International Ltd.**
**Kisshoin, Minami-ku,**
**Kyoto-shi, Kyoto 601-8520 (JP)**

(72) Inventors:
• **OBUCHI, Susumu**
**Kyoto, 601-8520 (JP)**
• **FUJITA, Kohei**
**Kyoto, 601-8520 (JP)**
• **HAZE, Akinori**
**Kyoto, 601-8520 (JP)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(56) References cited:
**EP-A2- 2 774 199     US-A- 4 188 268**
**US-A- 4 315 829      US-A1- 2011 165 448**
**US-B1- 6 274 274**

• **A. Vandenberghe ET AL: "Sulphonation of alkylhydroquinones", Bulletin des sociétés chimiques belges : Vlaamse Chemische Vereniging, vol. 74, no. 9-10, 31 December 1965 (1965-12-31), pages 397-406, XP055376563, BE ISSN: 0037-9646, DOI: 10.1002/bscb.19650740903**

**Description**

FIELD

The present invention relates to a positive electrode plate for a lead-acid battery, a lead-acid battery and a method of manufacturing a positive electrode plate for a lead-acid battery.

BACKGROUND

Conventionally, as a current collector used for a lead-acid battery, there has been known an expanded grid which is manufactured by stretching a lead alloy sheet where slits are formed in a staggered manner. In view of the nature of a method of manufacturing the expanded grid, a large restriction is imposed on a design of arrangement of grid crosspieces. Accordingly, it is difficult to make the distribution of electrical potential more uniform over the whole plate by optimizing the arrangement of the grid crosspieces. In the expanded grid, non-uniformity of the distribution of electrical potential over the whole plate is liable to be increased and hence, corrosion locally occurs. As a result, there exists a drawback that a life of the plate is shortened. As a current collector used for a lead-acid battery, there has been known a cast grid. The cast grid is a grid manufactured by casting molten lead into a mold for a grid and solidifying the casted lead. The cast grid has higher flexibility in designing the arrangement of grid crosspieces compared to an expanded grid. However, in an attempt to decrease a thickness of the grid, molten lead does not smoothly flow at the time of casting molten lead in a mold for a grid and hence, there exists a drawback that it is difficult to decrease the thickness of the grid.

As a current collector which can overcome these drawbacks, there has been known a punched grid. See JP 2014-235844 A. The punched grid is a grid manufactured by punching a rolled sheet made of a lead alloy. A grid design of the punched grid can be performed more flexibly compared to an expanded grid and a cast grid. Further, a thickness of the grid can be decreased compared to the cast grid.

With respect to manufacturing a negative electrode grid, JP2010-520607 A discloses "It must be understood that, to impart a more excellent improved paste adhesive property to a negative electrode grid than a grid having a quadrangular cross section manufactured by a punching step, arbitrary number of modified grid wire shapes may be selected. According to various exemplified embodiments, the modified grid wire has substantially a diamond shape, a rhombic shape, a hexagonal shape, an octagonal shape or an elliptical shape." It is also disclosed that, by forming a cross section of grid crosspieces (grid wire) of the punched grid on a negative electrode into a hexagonal shape or an octagonal shape from a quadrangular shape, adhesiveness between a paste (negative active material) and the punched grid can be increased.

JP 2013-140677 A discloses "In a flooded-type lead-acid battery for an idling stop vehicle, a positive active material has a density of 4.4 g/cm$^3$ or more and 4.8 g/cm$^3$ or less and contains 0.05 mass% or more and 1.0 mass% or less Sn in terms of metal Sn in a formed state." There is also disclosed "By setting the density of the formed positive active material to 4.4 g/cm$^3$ or more and 4.8 g/cm$^3$ or less, durability of the battery used in an insufficiently charged state can be enhanced. A capacity of the flooded-type lead-acid battery is lowered along with such setting of the density of the formed positive active material and hence, lowering of the capacity is suppressed by allowing the positive active material to contain 0.05 mass% or more and 1.0 mass% or less of Sn in terms of metal Sn."

As disclosed in JP 2013-140677 A, when a lead-acid battery is used in an incompletely charged state (partial state of charge, PSOC) as in the case of a lead-acid battery for an idling stop vehicle, a life performance of the battery can be enhanced by increasing the density of a positive electrode material. On the other hand, an initial capacity is lowered when the density of the positive electrode material is increased.

US 6 274 274 B1 discloses a method of forming battery grids or plates that includes the step of mechanically reshaping or refinishing battery grid wires to.

US 4 188 268 A discloses a lead battery comprising as an active material a formation product of a novel lead monoxide or a heat treatment product thereof.

US 4 315 829 A discloses a method of preparing a battery paste for a lead-acid storage battery comprising mixing a water dispersion of polyfluoroethylene with lead material, adding an aqueous solution of sulfuric acid to the lead material-dispersion mix and mixing to form a paste having fibrillation developed therein, controlling the amount of fibrillation developed in the paste, and controlling the paste density for use in a battery plate.

US 2011/165448 A1 discloses a tube plate for an electrode of a lead acid battery, wherein the tube plate has an upper frame and a plurality of lead or lead alloy cores extending substantially parallel from the upper frame, and in the cross-section relative to their longitudinal extent the cores have a surface profile with at least three convex portions and at least three concave portions, wherein convex and concave portions alternate in the course of the surface profile.

SUMMARY

To enhance a life performance of a lead-acid battery used in a PSOC, inventors of the present invention have come up with an idea of using a punched grid, which has a longer life than an expanded grid, as a positive electrode current collector, and increasing a density of a positive electrode material. However, when the density of the positive electrode material is increased, a utilization factor of the positive electrode material is lowered, so that an initial capacity is lowered. As disclosed in JP 2013-140677 A, the initial capacity is enhanced by adding Sn to the positive electrode material. However, when Sn is added to the positive electrode material, an electrolyte solution is liable to be decreased along with the use of the lead-acid battery. The inventors of the present invention have studied the enhancement of the initial capacity by a method other than the method of adding Sn to the positive electrode material for avoiding the decrease of an electrolyte solution along with the use of the lead-acid battery.

It is an object of the present invention to provide a lead-acid battery which exhibits a high life performance and can enhance an initial capacity in PSOC.

The present invention provides a positive electrode plate for a lead-acid battery with features of claim 1, a lead-acid battery with features of claim 6, and a method of manufacturing a positive electrode plate for a lead-acid battery with features of claim 7.

BRIEF DESCRIPTION OF DRAWINGS

FIG. 1 is a plan view of a positive electrode current collector according to one embodiment.

FIG. 2 is a cross-sectional view of a positive electrode plate where a grid crosspiece has a quadrangular shape in a cross section.

FIG. 3 is a cross-sectional view of a positive electrode plate where a grid crosspiece has an octagonal shape in the cross section.

FIG. 4 is a cross-sectional view of a positive electrode plate where a grid crosspiece has a non-polygonal shape in the cross section with rounded corner portions.

FIG. 5 is a view showing a cross-sectional shape of a grid crosspiece having an approximately octagonal shape in the cross section.

DESCRIPTION OF EMBODIMENTS

According to an embodiment of the present invention, there is provided a positive electrode plate for a lead-acid battery which includes: a grid made of a lead alloy that has a banded structure; and a positive electrode material, wherein the grid has grid crosspieces, a cross-sectional shape of the grid crosspiece perpendicular to an extending direction of the grid crosspiece is any one of a polygonal shape having five or more sides, an approximately polygonal shape having five or more sides, and non-polygonal shape, and a density of the positive electrode material after being subjected to formation is 4.1 to 4.7 [g/cm$^3$].

The density of the positive electrode material after being subjected to formation may be 4.2 to 4.7 [g/cm$^3$].

The density of the positive electrode material after being subjected to formation may be 4.3 to 4.7 [g/cm$^3$].

The density of the positive electrode material after being subjected to formation may be 4.4 to 4.7 [g/cm$^3$].

According to another embodiment of the present invention, there is provided a lead-acid battery which includes the positive electrode plate.

According to another embodiment of the present invention, there is provided a method of manufacturing a positive electrode plate for a lead-acid battery including a grid and a positive electrode material, the method includes: forming the grid from a lead alloy sheet by forming grid crosspieces by cutting; deforming a corner portion of the grid crosspiece in a cross section perpendicular to an extending direction of the grid crosspiece; and setting a density of the positive electrode material after being subjected to formation to 4.1 to 4.7 [g/cm$^3$].

The grid may be a grid made of a lead alloy that has a banded structure.

The cutting may be press working.

The cutting may be punching.

The corner portion of the grid crosspiece may be deformed by press working.

The positive electrode plate according to the present invention can enhance both life performance and an initial capacity of a lead-acid battery.

(Summary of this embodiment)

Hereinafter, an embodiment of the present invention is described. The embodiment can be changed as desired in accordance with a common knowledge of those who are skilled in the art and the disclosure of the prior art. In the description made hereinafter, a positive electrode material may be also referred to as a positive active material, and a negative electrode material may be also referred to as a negative active material. A positive electrode plate is formed of a positive electrode current collector and a positive active material (positive electrode material), and a negative electrode plate is formed of a negative electrode current collector and a negative active material. Solid components other than the current collector belong to an active material (electrode material). Further, a grid is one mode of a current collector.

A lead-acid battery according to the embodiment includes a group of plates which is formed of: negative electrode plates each containing lead as a main component of an active material; positive electrode plates each containing lead dioxide as a main component of an active material; and porous separators each of which is interposed between each two of these plates. The group of plates is housed in a container, and is immersed in a flowable electrolyte solution containing a diluted sulfuric acid as a main component.

The positive electrode plate according to the embodiment is formed by filling a grid part of a current collector which is made of a Pb-Sb alloy, a Pb-Ca alloy, a Pb-Ca-Sn alloy or the like with a paste-like active material. These respective constitutional members can be selectively used from known suitable constitutional members depending on a purpose or an application of a lead-acid battery.

A positive electrode current collector 10 is made of a lead alloy that has a banded structure. The lead alloy which has a banded structure is formed by rolling a lead alloy, for example. When a thickness of a lead alloy is decreased by rolling, lead particles contained in an original lead alloy and forming a metal structure are collapsed, so that a banded structure appears in an advancing direction in rolling. In the case where a current collector is manufactured by casting, a lead alloy which forms a current collector does not have a banded structure. The lead alloy which has a banded structure has an advantage that the lead alloy has a high strength.

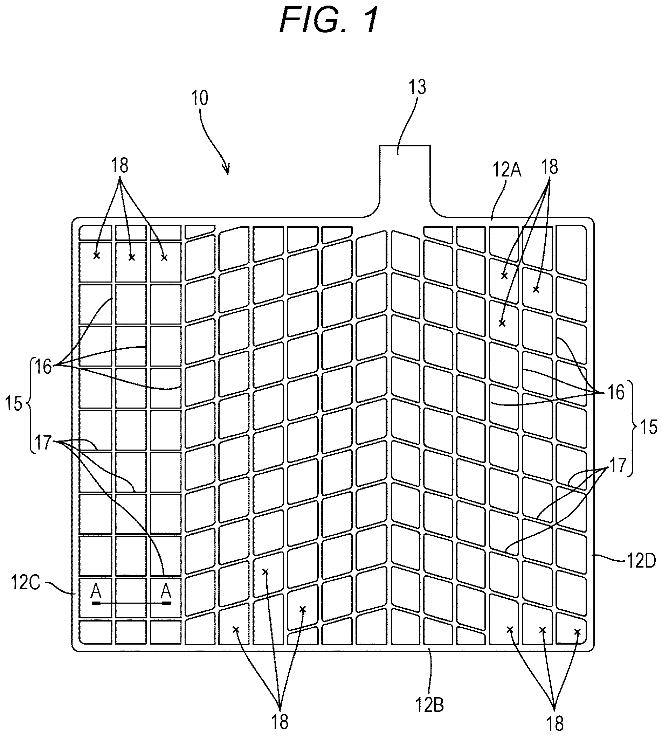

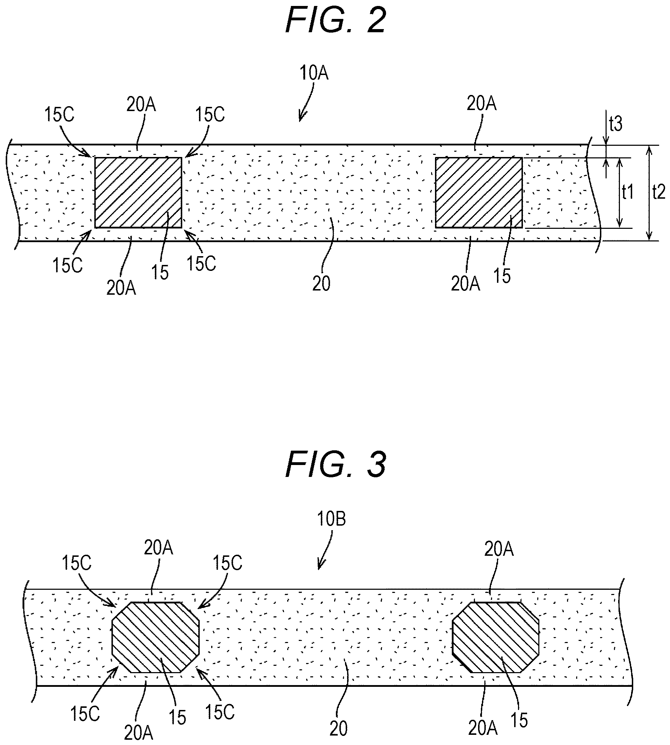

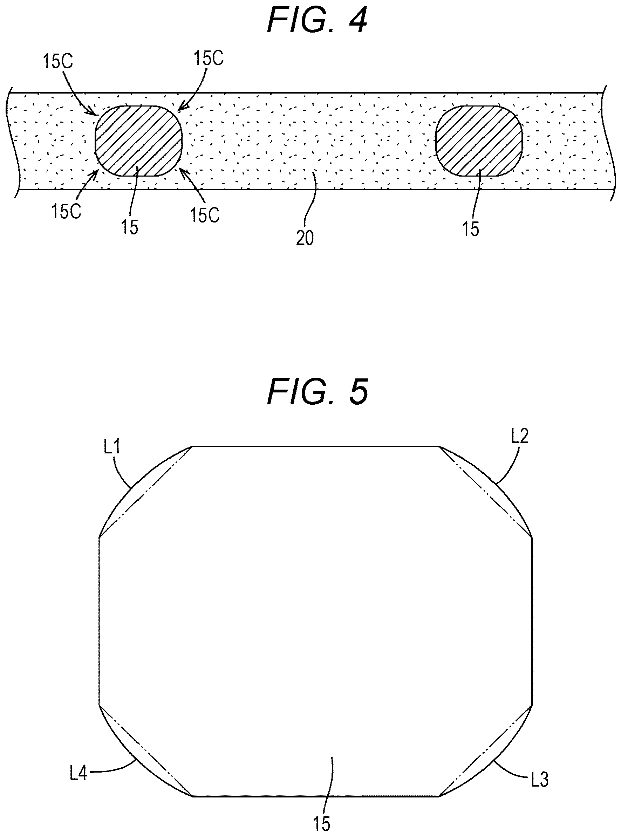

In grid crosspieces 15 of the positive electrode current collector 10, corner portions 15C of the grid crosspiece 15 are deformed in the cross section perpendicular to an extending direction of the grid crosspiece 15. The phrase "corner portions 15C of the grid crosspiece 15 are deformed in the cross section" means that the corner portions 15C of the grid crosspiece 15 are deformed from a right angle shape shown in FIG. 2 to a shape other than the right angle shape such as an oblique shape shown in FIG. 3 or a rounded shape shown in FIG. 4. Particularly, it is preferable that the corner portion 15C be deformed more gently than a right angle. FIG. 3 and FIG. 4 show examples where all of four corner portions 15C are deformed. However, only some corner portions 15C may be deformed. Cross-sectional views of positive electrode plate shown in FIG. 2 to FIG. 4 are respectively cross-sectional views taken along a line A-A in FIG. 1. FIG. 2 to FIG. 4 respectively show a cross section of a first crosspiece 16 of the grid crosspiece 15 taken along a plane perpendicular to an extending direction (vertical direction in FIG. 1) of the first crosspiece 16. Hereinafter, unless otherwise specified, the cross section perpendicular to an extending direction of the grid crosspiece 15 is simply referred to as "cross section of the grid crosspiece".

A cross-sectional shape of the grid frame 15 is any one of a polygonal shape having five or more sides, an approximately polygonal shape having five or more sides, and a non-polygonal shape. In other word, the cross-sectional shape of the grid frame 15 is any one of a pentagonal shape, a polygonal shape having more sides than the pentagonal shape, an approximately pentagonal shape, an approximately polygonal shape having more sides than the approximately pentagonal shape, and the non-polygonal shape. "Polygonal shape" is a shape whose all sides are formed of a straight line and where the number of vertexes is equal to the number of sides. "Approximately polygonal shape" is a shape which can be substantially regarded as a polygonal shape because the number of vertexes is equal to the number of sides although the sides are not formed of a straight line. FIG. 5 shows an approximately octagonal shape where some sides L1 to L4 are formed of an outwardly curved line. In the case where the cross-sectional shape of the grid crosspiece 15 is formed into the polygonal shape having five or more sides, or the approximately polygonal shape having five or more sides, it is preferable that all interior angles be 90° or more.

"Non-polygonal shape" is intended to include the following two shapes.

(1) A shape formed of only curved lines
(2) A shape formed by combining straight lines and curved lines (excluding approximately polygonal shape)

The shape defined in (1) includes a circular shape, an elliptical shape and the like, for example. The shape defined in (2) includes a shape where all four corner portions 15C are formed of curved lines as shown in FIG. 4 and a shape where some corner portions 15C are formed of a curved line among four corner portions 15C, for example. Besides the above-mentioned shapes, a "non-polygonal shape" also includes an oblong circular shape and the like.

As shown in FIG. 1, the positive electrode current collector 10 includes a tab portion 13, and the grid crosspieces 15 which are connected to the tab portion 13. The tab portion 13 may be directly connected to the grid crosspieces 15 or may be connected to the grid crosspieces 15 by way of a frame rib 12. The grid crosspieces 15 may be arranged as desired. It is preferable that the grid crosspieces 15 be arranged approximately linearly. With such a configuration, an electric current flow path to the tab portion 3 can be further shortened so that an electric resistance can be further decreased.

The tab portion 13 projects to the outside of the positive electrode current collector 10. The tab portion 13 is provided for connecting positive electrode plates to each other by way of a strap not shown in the drawing. The positive electrode current collector 10 may have the frame rib 12 on a first side portion 12A or may have the frame rib 12 on a second side portion 12B disposed opposite to the first side portion 12A. The positive electrode current collector 10 may have the frame rib 12 on either one of a third side portion 12C and a fourth side portion 12D which connect ends of the first side portion 12A and ends of the second side portion 12B to each other respectively. It is preferable that the positive electrode current collector 10 have the frame rib 12 on each of the first side portion 12A, the second side portion 12B, the third side portion 12C, and the fourth side portion 12D. With such a configuration, even when charging and discharging of the lead-acid battery are repeated, it is possible to suppress the elongation of the positive electrode plate.

The positive electrode current collector 10 is manufactured by removing portions of a rolled sheet made of a lead alloy which has a banded structure by cutting (a primary working) except for portions corresponding to the tab portion 13, the frame ribs 12 and the grid crosspieces 15. The current collector manufactured in this manner has through holes 18. The primary working may be press working such as punching, water jet working, laser working or the like, for example. When press working such as punching is performed as the primary working, current collectors can be manufactured on a mass production basis at a low cost. Accordingly, it is preferable to adopt press working such as punching as the primary working.

At a stage where the primary working is finished, the grid crosspiece 15 of the positive electrode current collector 10 has a rectangular shape in the cross section, and the corner portions 15C has a right angle shape as shown in FIG. 2. In view of the above, the positive electrode current collector 10 is manufactured by applying working (a secondary working) so as to deform the corner portions 15C of the grid crosspiece 15 in the cross section. To be more specific, the corner portions 15C of the grid crosspiece 15 in the cross section are deformed into a shape other than a right angle shape such as an oblique shape shown in FIG. 3 or a rounded shape shown in FIG. 4 by the secondary working. The secondary working may be applied to the entire cross section including the corner portions 15C. By performing such the secondary working, it is also possible to deform a cross section of the grid crosspiece 15 into a circular shape or an elliptical shape. The secondary working may be applied only to some grid crosspieces or may be applied to all grid crosspieces. It is preferable that the secondary working be applied to all grid crosspieces. When the positive electrode current collector 10 has the frame ribs 12, the frame ribs 12 also have a rectangular cross section at a stage where the primary working is finished. Accordingly, the secondary working may be also applied to the frame ribs 12. The secondary working may be press working, cutting working, polishing working or the like, for example. When press working is performed as the secondary working, current collectors can be manufactured on a mass production basis at a low cost. Accordingly, it is preferable to adopt press working as the secondary working. The primary working and the secondary working may be performed separately or may be performed simultaneously.

The negative electrode plate is formed by filling a grid part of a current collector which is made of a Pb-Sb alloy, a Pb-Ca alloy, a Pb-Ca-Sn alloy or the like with a paste-like active material. These respective constitutional members can be selectively used from known suitable constitutional members depending on a purpose or an application of a lead-acid battery. The negative electrode current collector may be formed of a cast grid, an expanded grid, a punched grid or the like.

The positive electrode plate and the negative electrode plate can be manufactured through an active material paste preparing step, an active material paste filling step, an aging step, a drying step, and a formation step.

In the active material paste preparing step, an active material paste for a positive electrode and an active material paste for a negative electrode are prepared by adding a diluted sulfide acid and an additive to lead particles at a predetermined mixing ratio, and by kneading these materials. The positive active material paste may contain Sn.

In the active material paste filling step, the respective active material pastes are filled in each of the positive electrode current collector and the negative electrode current collector. With such a processing, an undried positive electrode plate and an undried negative electrode plate can be obtained.

The aging step is a step of applying aging to the undried positive electrode plate and an undried negative electrode plate. Aging of these undried plates is advanced in an atmosphere having proper humidity and proper temperature. Thereafter, by applying drying processing, an unformed positive electrode plate and an unformed negative electrode plate are obtained.

The drying step is a step of applying drying treatment to the unformed positive electrode plate and the unformed negative electrode plate after aging is finished.

In the formation step, the positive electrode plate and the negative electrode plate to which the drying treatment is applied are oxidized and reduced respectively by arranging the positive electrode plate and the negative electrode plate in a diluted sulfuric acid electrolyte solution and by supplying a direct current to the positive and negative electrode plates. With such treatment, a formed positive electrode plate and a formed negative electrode plate are obtained.

The density of the formed positive electrode material is 4.1 to 4.7 g/cm$^3$. By adjusting an amount of moisture contained in the formed positive active material paste at the time of preparing the positive electrode plate, the density of the positive electrode material at the time of performing formation can be adjusted. To be more specific, by adjusting the amount of moisture contained in the positive active material paste in the active material paste preparing step, the density of the positive electrode material at the time of performing formation can be adjusted.

The density of the positive electrode material is measured as follows. A formed electrode in a fully charged state is taken out by disassembling a lead-acid battery, and the electrode is washed by water and is dried. In a state where the electrode material is not pulverized, an apparent volume v per 1g of the positive electrode material and a total pore volume u per 1g of the positive electrode material are measured by a mercury intrusion method. The apparent volume v is a sum of a solid volume of the electrode material and a volume of closed pores. The electrode material is filled in a container whose volume V1 is already known, and a volume V2 where a pore diameter corresponds to 100 μm or more is measured by the mercury intrusion method. The intrusion of mercury is continued, a total pore volume u is measured, a value of (V1 - V2) - u is assumed as an apparent volume v, and the density d of the positive electrode material is obtained based on d = 1/(v + u) = 1/(V1 - V2). In the measurement using the mercury intrusion method, the measurement is performed under a condition that a pressure is increased to a maximum pressure of 4.45 psia (30.7 Kpa), a contact angle is set to 130°, and a surface tension of mercury is set to 484 dynes/cm. A fully-charged state means a state where an electrode is charged with a 5-hour rate current until a terminal voltage measured for every 15 minutes exhibits a fixed value (± 0.01 V) three times continuously during charging.

[Examples]

Hereinafter, examples of the present embodiment are described.

(Positive electrode plate)

The positive electrode plate is a so-called paste-type positive electrode plate. The positive electrode plate includes: the positive electrode current collector 10 (punched grid) which is made of a lead alloy and is manufactured by punching; and the positive active material 20.

The positive electrode current collector 10 is obtained by punching (the primary working) to a rolled sheet made of an antimony-free Pb-Ca-Sn alloy which has a banded structure.

As shown in FIG. 1, the positive electrode current collector 10 has the frame rib 12 (collective term of 12A to 12D). The frame rib 12 includes the first side portion 12A, the second side portion 12B, the third side portion 12C, and the fourth side portion 12D. The first side portion 12A and the second side portion 12B of the frame rib 12 extend in the lateral direction and are disposed opposite to each other in the vertical direction. The third side portion 12C and the fourth side portion 12D of the frame rib 12 extend in the vertical direction and respectively connect left end portions and right end portions of the first side portion 12A and the second side portion 12B to each other. The first side portion 12A has the tab portion 13.

The grid crosspieces 15 include the first crosspieces 16 and the second crosspieces 17. The plurality of first crosspieces 16 are disposed such that the first crosspieces 16 extend linearly between the first side portion 12A and the second side portion 12B. The plurality of second crosspieces 17 are disposed such that the second crosspieces 17 intersect with the first crosspieces 16.

The second crosspiece 17 includes orthogonally intersecting crosspieces which orthogonally intersect with the first crosspieces 16, and oblique crosspieces which are inclined with respect to the first crosspieces 16 at a predetermined angle.

In the positive electrode current collector 10 obtained by punching, unless working for deforming the cross section of the grid crosspiece 15 is performed, the cross section of the grid crosspiece 15 has a rectangular shape as shown in FIG. 2. By applying press working to the positive electrode current collector 10, the positive electrode current collector is obtained where the cross-sectional shape of the grid crosspiece 15 is deformed into an octagonal shape as shown in FIG. 3. In the description made hereinafter, the positive electrode current collector where the cross-sectional shape of the grid crosspiece 15 is not deformed is indicated by "10A", and the positive electrode current collector where the cross-sectional shape of the grid crosspiece 15 is deformed into the octagonal shape is indicated by "10B".

The positive active material paste is prepared by mixing lead oxide, synthetic resin fibers for reinforcing members, water and a sulfuric acid by a ball-mill method. The positive active material paste is filled into the positive electrode current collector 10A and the positive electrode current collector 10B. The positive electrode current collector 10A and the positive electrode current collector 10B filled with the positive active material paste are subjected to aging, drying and formation. Thus positive electrode plates having a width of 100 mm, a height of 110 mm, and a thickness of 1.4 mm is prepared. As shown in FIG. 2 and FIG. 3, the positive active material 20 is filled (in an over paste state) so as to cover the grid crosspieces 15 of the positive electrode current collectors 10A and 10B. While a thickness t2 of the positive active material 20 is "1.4 mm", for example, a thickness t1 of each of the positive electrode current collectors 10A and 10B is "1.0 mm", for example. A thickness t3 of an over paste layer 20A is 0.2 mm on one side of the positive electrode current collectors 10A and 10B. By adjusting an amount of moisture contained in the positive active material paste, positive electrode plates where the density of a formed positive active material is respectively 3.5 g/cm$^3$, 4.2 g/cm$^3$, 4.4 g/cm$^3$, and 4.7 g/cm$^3$ are prepared. The positive active material may not be over-pasted to the positive electrode current collector 10.

(Negative electrode plate)

A negative paste is prepared by mixing lead oxide, barium sulfide, lignin, carbon black, synthetic resin fibers for reinforcing material, water and a sulfuric acid by a ball-mill method. The negative paste is filled in an expanded-grid-type negative electrode current collector made of an antimony-free Pb-Ca-Sn alloy, and the negative electrode current collector filled with the negative paste is subjected to aging, drying and formation, thus the negative electrode plate is prepared.

(Battery configuration)

Six positive electrode plates and seven negative electrode plates which are accommodated in a bag-shaped separator are alternately layered to each other. As the separator, a separator generally used as a separator for a flooded-type lead-acid battery can be used. For example, the separator may be formed of a sheet containing polyolefin as a main component and having micropores, or a mat containing a resin or glass fibers as a main component. A plate group is manufactured by connecting tabs of the positive electrode plates stacked to each other and tabs of the negative electrode plates stacked to each other using a positive electrode strap and a negative electrode strap by a cast-on-strap method respectively. Six plate groups are housed in a container made of polypropylene in a state where the six plate groups are connected in series, and a sulfuric acid is added in the container, thus a flooded-type lead-acid battery having an electrolyte solution gravity of 1.285 is prepared.

(Measurement of initial capacity)

The lead-acid battery which uses the positive electrode current collector 10A in the positive electrode plate and the lead-acid battery which uses the positive electrode current collector 10B in the positive electrode plate are prepared, and a 5-hour rate capacity is measured as an initial capacity with respect to the respective lead-acid batteries. The 5-hour rate capacity is measured in accordance with JIS D5301 (2006 edition). Assuming 5-hour rate capacity of the lead-acid battery which uses the positive electrode current collector 10B as "X1" and the 5-hour rate capacity of the lead-acid battery which uses the positive electrode current collector 10A as "X2", a change rate Z of 5-hour rate capacity is calculated by the following formula (1). The change rate Z of the 5-hour rate capacity indicates a change rate of the 5-hour rate capacity when the cross-sectional shape of the grid crosspiece 15 is changed from the quadrangular shape to the octagonal shape. The larger a value of the change rate, the larger an effect of enhancing the 5-hour rate capacity due to a change in the cross-sectional shape of the grid crosspiece 15 becomes. The result of measurement is shown in Table 1.

$$Z = (X1 - X2) / X2 \times 100 \qquad (1)$$

[Table 1]

| Density of positive active material (g/cm$^3$) | Change rate Z of 5-hour rate capacity (%) |
|---|---|
| 3.5 | 3 |
| 4.2 | 11 |
| 4.4 | 12 |
| 4.7 | 12 |

When the density of the positive active material is 3.5 g/cm$^3$, the change rate Z of the 5-hour rate capacity is 3%. On the other hand, when the density of the positive active material is 4.1 g/cm$^3$ or more, particularly, 4.2 g/cm$^3$ or more, the change rate Z of the 5-hour rate capacity is 11 to 12%. In this case, the change rate Z is largely enhanced compared to a case where the density of the positive active material is 3.5 g/cm$^3$. There is a large difference in the change rate of the 5-hour rate capacity due to a change in the cross-sectional shape of the grid crosspiece 15 between the case where the density of the positive active material is 3.5 g/cm$^3$ and the case where the density of the positive active material is 4.1 g/cm$^3$ or more, particularly, 4.2 g/cm$^3$ or more. Also in the case where the cross-sectional shape of the grid crosspiece 15 is formed into a hexagonal shape or a non-polygonal shape such as a shape where the corner portion 15C is rounded as shown in FIG. 4, the same result is obtained. There has not been known a fact that an effect of enhancing the 5-hour rate capacity can be increased by changing the cross-sectional shape of the grid crosspiece 15 within a particular range of the density of the positive active material, and such a fact cannot be expected by those who are skilled in the art based on a common technical knowledge which forms the prior art. Further, there are many factors which influence an initial capacity of a lead-acid battery. Accordingly, a considerable amount of trial and error is necessary for those who are skilled in the art to arrive at the combination of that the density of the positive active material is 4.1 g/cm$^3$ or more, particularly 4.2 g/cm$^3$ or more and that the cross-sectional shape of the grid crosspiece 15 is changed and hence, those who are skilled in the art cannot easily arrived at such a combination. By using the positive electrode plate which is formed of the combination of the formed positive active material having the density of 4.1 g/cm$^3$ or more, preferably 4.2 g/cm$^3$ or more and the punched grid where the cross-sectional shape of the grid crosspiece 15 is changed in the lead-acid battery, it is possible to provide the lead-acid battery which exhibits improved life performance in PSOC and also exhibits an improved initial capacity.

When the density of the positive active material is 4.3 g/cm$^3$ or more, the effect of enhancing the 5-hour rate capacity can be further increased and hence, such setting is more preferable. When the density of the positive active material is 4.4 g/cm$^3$ or more, the effect of enhancing the 5-hour rate capacity can be particularly increased and hence, such setting is particularly preferable.

When the density of the positive active material exceeds 5.0 g/cm$^3$, an effect of lowering an initial capacity is increased and hence, it is preferable that the density of the positive active material be set to 5.0 g/cm$^3$ or less. To suppress the lowering of the initial capacity within a practical use range, it is more preferable that the density of the positive active material be 4.8 g/cm$^3$ or less.

The positive electrode plate of this embodiment is preferably applicable to an idling-stop lead-acid battery where it is desirable that a positive active material have high density for enhancing lifetime performance in PSOC.

## Claims

1. A positive electrode plate for a lead-acid battery comprising:

   a punched grid having grid crosspieces (15); and
   a positive electrode material,
   wherein a corner portion (15C) of the grid crosspiece (15) in a cross section perpendicular to an extending direction of the grid crosspiece (15) is deformed, wherein a cross-sectional shape of the grid crosspiece (15) perpendicular to the extending direction of the grid crosspiece (15) is any one of a polygonal shape having five or more sides, an approximately polygonal shape having five or more sides, and non-polygonal shape, and
   a density of the positive electrode material after being subjected to formation is 4.1 to 4.7 [g/cm$^3$].

2. The positive electrode plate for a lead-acid battery according to claim 1, wherein the punched grid is made of a lead alloy which has a banded structure.

3. The positive electrode plate for a lead-acid battery according to claim 1 or 2, wherein the density of the positive electrode material after being subjected to formation is 4.2 to 4.7 [g/cm3].

4. The positive electrode plate for a lead-acid battery according to claim 1 or 2, wherein the density of the positive electrode material after being subjected to formation is 4.3 to 4.7 [g/cm$^3$].

5. The positive electrode plate for a lead-acid battery according to claim 1 or 2, wherein the density of the positive electrode material after being subjected to formation is 4.4 to 4.7 [g/cm$^3$].

6. A lead-acid battery comprising the positive electrode plate according to any one of claims 1 to 5.

7. A method of manufacturing a positive electrode plate for a lead-acid battery including a grid and a positive electrode material, the method comprising:

forming the grid from a lead alloy sheet by forming grid crosspieces (15) by cutting;
deforming a corner portion (15C) of the grid crosspiece (15) in a cross section perpendicular to an extending direction of the grid crosspiece (15), wherein a cross-sectional shape of the grid crosspiece (15) perpendicular to the extending direction of the grid crosspiece (15) is any one of a polygonal shape having five or more sides, an approximately polygonal shape having five or more sides, and non-polygonal shape; and
setting a density of the positive electrode material after being subjected to formation to 4.1 to 4.7 [g/cm$^3$].

8. The method of manufacturing a positive electrode plate for a lead-acid battery according to claim 7, wherein the grid is a grid made of a lead alloy that has a banded structure.

9. The method of manufacturing a positive electrode plate for a lead-acid battery according to claim 7 or 8, wherein the cutting is press working.

10. The method of manufacturing a positive electrode plate for a lead-acid battery according to claim 7 or 8, wherein the cutting is punching.

11. The method of manufacturing a positive electrode plate for a lead-acid battery according to any one of claims 7 to 10, wherein the corner portion (15C) of the grid crosspiece (15) in the cross section perpendicular to the extending direction of the grid crosspiece (15) is deformed by press working.


**Patentansprüche**

1. Positive Elektrodenplatte für eine Blei-Säure-Batterie, umfassend:

ein gestanztes Gitter mit Gitterquerstücken (15); und
ein positives Elektrodenmaterial,
wobei ein Eckabschnitt (15C) des Gitterquerstücks (15) in einem Querschnitt senkrecht zu einer Ausdehnungsrichtung des Gitterquerstücks (15) verformt ist, wobei eine Querschnittsform des Gitterquerstücks (15) senkrecht zu der Ausdehnungsrichtung des Gitterquerstücks (15) eine aus einer polygonalen Form mit fünf oder mehr Seiten, einer annähernd polygonalen Form mit fünf oder mehr Seiten und einer nicht polygonalen Form ist, und eine Dichte des positiven Elektrodenmaterials 4,1 bis 4,7 [g/m$^3$] beträgt, nachdem es der Formbildung unterzogen wurde.

2. Positive Elektrodenplatte für eine Blei-Säure-Batterie nach Anspruch 1, wobei das gestanzte Gitter aus einer Bleilegierung besteht, die eine gebänderte Struktur aufweist.

3. Positive Elektrodenplatte für eine Blei-Säure-Batterie nach Anspruch 1 oder 2, wobei die Dichte des positiven Elektrodenmaterials 4,2 bis 4,7 [g/cm$^3$] beträgt, nachdem es der Formbildung unterzogen wurde.

4. Positive Elektrodenplatte für eine Blei-Säure-Batterie nach Anspruch 1 oder 2, wobei die Dichte des positiven Elektrodenmaterials 4,3 bis 4,7 [g/cm$^3$] beträgt, nachdem es der Formbildung unterzogen wurde.

5. Positive Elektrodenplatte für eine Blei-Säure-Batterie nach Anspruch 1 oder 2, wobei die Dichte des positiven Elektrodenmaterials 4,4 bis 4,7 [g/cm$^3$] beträgt, nachdem es der Formbildung unterzogen wurde.

6. Blei-Säure-Batterie, umfassend die positive Elektrodenplatte nach einem der Ansprüche 1 bis 5.

7. Verfahren zur Herstellung einer positiven Elektrodenplatte für eine Blei-Säure-Batterie mit einem Gitter und einem positiven Elektrodenmaterial, wobei das Verfahren umfasst:

Formen des Gitters aus einem Bleilegierungsblech durch Formen von Gitterquerstücken (15) durch Schneiden;
Verformen eines Eckabschnitts (15C) des Gitterquerstücks (15) in einem Querschnitt senkrecht zu einer Ausdehnungsrichtung des Gitterquerstücks (15), wobei eine Querschnittsform des Gitterquerstücks (15) senkrecht zur Ausdehnungsrichtung des Gitterquerstücks (15) eines aus einer polygonalen Form mit fünf oder mehr Seiten, einer ungefähr polygonalen Form mit fünf oder mehr Seiten und einer nicht polygonalen Form ist; und

Einstellen einer Dichte des positiven Elektrodenmaterials auf 4,1 bis 4,7 [g/cm$^3$], nachdem es der Formbildung unterzogen wurde.

8. Verfahren zur Herstellung einer positiven Elektrodenplatte für eine Blei-Säure-Batterie nach Anspruch 7, wobei das Gitter ein Gitter aus einer Bleilegierung ist, die eine gebänderte Struktur aufweist.

9. Verfahren zur Herstellung einer positiven Elektrodenplatte für eine Blei-Säure-Batterie nach Anspruch 7 oder 8, wobei das Schneiden ein Pressformen ist.

10. Verfahren zur Herstellung einer positiven Elektrodenplatte für eine Blei-Säure-Batterie nach Anspruch 7 oder 8, wobei das Schneiden Stanzen ist.

11. Verfahren zur Herstellung einer positiven Elektrodenplatte für eine Blei-Säure-Batterie nach einem der Ansprüche 7 bis 10, wobei der Eckabschnitt (15C) des Gitterquerstücks (15) im Querschnitt senkrecht zur Ausdehnungsrichtung des Gitterquerstücks (15) durch Pressformen verformt wird.

**Revendications**

1. Plaque d'électrode positive pour batterie au plomb acide comprenant :

   une grille estampée avec des traverses de grille (15) ; et
   un matériau d'électrode positive,
   une partie en coin (15C) de la traverse de grille (15) dans une section perpendiculaire croisée à une direction s'étendant de la traverse de grille (15) étant déformée, une forme transversale de la traverse de grille (15) perpendiculaire à la direction s'étendant de la trverse de grille (15) étant l'une quelconque d'une forme polygonale ayant cinq côtés ou plus, d'une forme à peu près polygonale ayant cinq côtés ou plus et d'une forme non polygonale, et
   une densité du matériau d'électrode positive après avoir été soumis à un formation est de 4,1 à 4,7 [g/cm$^3$].

2. Plaque d'électrode positive pour batterie au plomb acide selon la revendication 1, dans laquelle la grille estampée est constituée d'un alliage de plomb qui a une structure en bande.

3. Plaque d'électrode positive pour batterie au plomb acide selon la revendication 1 ou 2, dans laquelle la densité du matériau d'électrode positive après avoir été soumis à une formation est de 4,2 à 4,7 [g/cm$^3$].

4. Plaque d'électrode positive pour batterie au plomb acide selon la revendication 1 ou 2, dans laquelle la densité du matériau d'électrode positive après avoir été soumis à une formation est de 4,3 à 4,7 [g/cm$^3$].

5. Plaque d'électrode positive pour batterie au plomb acide selon la revendication 1 ou 2, dans laquelle la densité du matériau d'électrode positive après avoir été soumis à une formation est de 4,4 à 4,7 [g/cm$^3$].

6. Batterie au plomb acide comprenant la plaque d'électrode positive selon l'une quelconque des revendications 1 à 5.

7. Procédé de fabrication d'une plaque d'électrode positive pour batterie au plomb acide comprenant une grille et un matériau d'électrode positive, le procédé comprenant les étapes consistant à :

   former la grille à partir d'une feuille en alliage de plomb en formant des traverses de grille (15) par découpage ;
   déformer une partie en coin (15C) de la traverse de grille (15) dans une section croisée perpendiculaire à une direction s'étendant de la traverse de grille (15), une forme transversale de la travers de grille (15) perpendiculaire à la direction s'étendant de la traverse de grille (15) étant l'une quelconque d'une forme polygonale ayant cinq côtés ou plus, une forme à peu près polygonale ayant cinq côtés ou plus et une forme non polygonale ; et
   régler une densité du matériau d'électrode positive après avoir été soumis à une formation à 4,1 à 4,7 [g/cm$^3$].

8. Procédé de fabrication d'une plaque d'électrode positive pour batterie au plomb acide selon la revendication 7, dans lequel la grille est une grille constituée d'un alliage en plomb qui a une structure en bande.

9. Procédé de fabrication d'une plaque d'électrode positive pour batterie au plomb acide selon la revendication 7 ou 8, dans lequel le découpage est un travail sous presse.

10. Procédé de fabrication d'une plaque d'électrode positive pour batterie au plomb acide selon la revendication 7 ou 8, dans lequel le découpage est un estampage.

11. Procédé de fabrication d'une plaque d'électrode positive pour batterie au plomb acide selon l'une quelconque des revendications 7 à 10, dans lequel la partie en coin (15C) de la traverse de grille (15) dans la section croisée perpendiculaire à la direction s'étendant de la traverse de grille (15) est déformée par travail sous presse.

# FIG. 1

## FIG. 2

## FIG. 3

# FIG. 4

# FIG. 5

**EP 3 203 572 B1**

**REFERENCES CITED IN THE DESCRIPTION**

**Patent documents cited in the description**

- JP 2014235844 A
- JP 2010520607 A
- JP 2013140677 A
- US 6274274 B1
- US 4188268 A
- US 4315829 A
- US 2011165448 A1